# EUROPÄISCHE PATENTANMELDUNG

(11) **EP 4 717 239 A1**
(43) Veröffentlichungstag der Anmeldung: **01.04.2026**
(21) Anmeldenummer: 24202457.8
(22) Anmeldetag: 25.09.2024
(51) Int. Cl.: A61G 5/10, A61G 5/12

(54) **GELENKIGE VERBINDEREINRICHTUNG UND PELOTTENHALTER MIT EINER SOLCHEN GELENKIGEN VERBINDEREINRICHTUNG**

(71) Anmelder: HOGGI GmbH, 56235 Ransbach-Baumbach (DE)
(72) Erfinder: Die Erfindernennung liegt noch nicht vor
(74) Vertreter: Franke, Markus

(57) **Zusammenfassung**

Die Erfindung betrifft eine gelenkige Verbindereinrichtung (1). Ferner betrifft die Erfindung einen Pelottenhalter (100) mit einer solchen gelenkigen Verbindereinrichtung (1). Die Verbindereinrichtung (1) weist einen ersten Gelenkarm (10), einen zweiten Gelenkarm (20) und ein Verbindungsarm (30) auf, wobei der erste Gelenkarm (10) einen ersten Lagerabschnitt (11) aufweist, wobei der erste Gelenkarm (10) mit seinem ersten Lagerabschnitt (11) um eine erste Schwenkachse (A1) schwenkbar in dem Verbindungsarm (30) gelagert ist und wobei der zweite Gelenkarm (20) einen zweiten Lagerabschnitt (21) aufweist, wobei der zweite Gelenkarm (20) mit seinem zweiten Lagerabschnitt (21) um eine zweite Schwenkachse (A2) schwenkbar in dem Verbindungsarm (30) gelagert ist, wobei die erste Schwenkachse (A2) und die zweite Schwenkachse (A2) zueinander parallel verlaufen, wobei die Verbindereinrichtung (1) eine Klemmeinheit aufweist, wobei die Klemmeinheit in dem Verbindungsarm (30) gelagert ist, wobei die Klemmeinheit eine vordere Klemmbacke und eine hintere Klemmbacke aufweist, wobei die Klemmbacken entlang einer Zustellrichtung aufeinander zustellbar sind zum Fixieren des ersten Gelenkarms (10) und des zweiten Gelenkarms (20) in ihrer jeweiligen Schwenkstellung zu dem Verbindungsarm (30).

## Beschreibung

Die Erfindung betrifft eine gelenkige Verbindereinrichtung. Ferner betrifft die Erfindung einen Pelottenhalter mit einer solchen gelenkigen Verbindereinrichtung.

Pelotten, beispielsweise an Rollstühle angebrachte Pelotten, dienen zur Stabilisierung und Führung des Nutzers. Sie korrigieren, führen und stützen körperliche beeinträchtigte Personen, die durch diverse Beeinträchtigungen ein oder mehrere Körperteile nicht selbst halten können und/oder einen eingeschränkten Muskeltonus für das entsprechende Körperteil haben.

Es gibt unterschiedliche Arten und Formen von Pelotten, wie z.B. Thorax-Pelotten, Kopfstützpelotten oder Pelotten zur Stützung von Becken oder Oberschenkeln.

Solche Pelotten werden typischerweise mit Pelottenhaltern an Rollstühlen, Betten, Stühlen oder sonstigen Hilfsmitteln für die beeinträchtigten Personen befestigt. Derartige Pelottenhalter sind in der Regel verstellbar, um durch Verstellen des Pelottenhalters eine optimale Positionierung und/oder Ausrichtung zu der Person, insbesondere hinsichtlich des zu Stabilisierenden Körperteils, wie beispielsweise den Kopf, herzustellen. Nach der Einrichtung des Pelottenhalters ist es notwendig, den Pelottenhalter in der entsprechenden Stellung zu fixieren.

Pelottensysteme mit Pelottenhalterungen zur Stützung von Körperteilen sind insbesondere im Bereich der technischen Rehabilitation bekannt.

Eine Sitzschale für Behindere, insbesondere für behinderte Kinder und Jugendliche, mit einstellbaren Pelotten ist beispielsweise aus der DE 20 2007 013 812 U1 bekannt.

Aus dem Stand der Technik bekannte Pelottenhalter weisen häufig eine gelenkige, insbesondere eine doppelgelenkige, Verbindereinrichtung auf. In der Regel weist die die Verbindereinrichtung einen ersten Gelenkarm, eine mit dem ersten Gelenkarm verbundene Pelotte, einen zweiten Gelenkarm mit einer Befestigungseinrichtung und ein Verbindungsarm auf, wobei der erste Gelenkarm einen ersten Lagerabschnitt aufweist, wobei der erste Gelenkarm mit seinem ersten Lagerabschnitt um eine erste Schwenkachse schwenkbar in dem Verbindungsarm gelagert ist und wobei der zweite Gelenkarm einen zweiten Lagerabschnitt aufweist, wobei der zweite Gelenkarm mit seinem zweiten Lagerabschnitt um eine zweite Schwenkachse schwenkbar in dem Verbindungsarm gelagert ist, wobei die erste Schwenkachse und die zweite Schwenkachse zueinander parallel verlaufen. Über die Befestigungseinrichtung kann der Pelottenhalter beispielsweise an einem Untergestell eines Rollstuhls befestigt werden. Über die gelenkige Verbindereinrichtung kann eine Einrichtung bzw. Ausrichtung der Pelotte zu der den Rollstuhl nutzenden Personen erfolgen. Im Anschluss an die Einrichtung müssen der erste Gelenkarm und der zweite Gelenkarm in der eingerichteten Schwenkstellung zu dem Verbindungsarm fixiert werden, damit die eingestellte Ausrichtung der Pelotte zu der den Rollstuhl nutzenden Personen dauerhaft stabil gehalten ist.

Problematisch bei den bekannten Verbindereinrichtung ist, dass für eine lagestabile Fixierung der Gelenkarme zu dem Verbindungsarm häufig mehrere Schritte und insbesondere separate Schritte je Gelenkarm notwendig sind. Bei aus dem Stand der Technik bekannten Verbindereinrichtung hat sich zudem gezeigt, dass zur Erreichung von hohen Klemmkräften zur lagestabilen Halterung der Gelenkarme eine Vielzahl von Bedienhandlungen notwendig sind, beispielsweise Anziehen von mehreren unterschiedlichen Klemmschrauben.

Aufgabe der vorliegenden Erfindung ist es, eine gelenkige Verbindereinrichtung zu schaffen, die die vorgenannten Nachteile überwindet. Ferner ist es Aufgabe der vorliegenden Erfindung einen diesbezüglich verbesserten Pelottenhalter anzugeben.

Gelöst werden diese Aufgaben durch die Gegenstände der unabhängigen Ansprüche. Die abhängigen Ansprüche betreffen vorteilhafte Weiterbildungen.

Die erfindungsgemäße gelenkige Verbindereinrichtung findet insbesondere Anwendung bei einem Pelottenhalter.

Es ist vorgesehen, dass die Verbindereinrichtung einen ersten Gelenkarm, einen zweiten Gelenkarm und ein Verbindungsarm aufweist, wobei der erste Gelenkarm einen ersten Lagerabschnitt aufweist, wobei der erste Gelenkarm mit seinem ersten Lagerabschnitt um eine erste Schwenkachse schwenkbar in dem Verbindungsarm gelagert ist und wobei der zweite Gelenkarm einen zweiten Lagerabschnitt aufweist, wobei der zweite Gelenkarm mit seinem zweiten Lagerabschnitt um eine zweite Schwenkachse schwenkbar in dem Verbindungsarm gelagert ist, wobei die erste Schwenkachse und die zweite Schwenkachse zueinander parallel verlaufen.

Die Verbindereinrichtung weist eine Klemmeinheit auf, wobei die Klemmeinheit in dem Verbindungsarm gelagert ist, wobei die Klemmeinheit eine vordere Klemmbacke und eine hintere Klemmbacke aufweist, wobei die Klemmbacken entlang einer Zustellrichtung aufeinander zustellbar sind zum Fixieren des ersten Gelenkarms und des zweiten Gelenkarms in ihrer jeweiligen Schwenkstellung zu dem Verbindungsarm.

Der erste Lagerabschnitt weist eine konzentrisch zu der ersten Schwenkachse verlaufende, konvex gekrümmte erste Klemmfläche auf, wobei die vordere Klemmbacke eine erste Gegenklemmfläche und die hintere Klemmbacke eine weitere erste Gegenklemmfläche aufweist, wobei die erste Gegenklemmfläche und die weitere erste Gegenklemmfläche jeweils komplementär zu der ersten Klemmfläche konkav gekrümmt sind, derart, dass bei aufeinander zugestellten Klemmbacken die erste Gegenklemmfläche und die weitere erste Gegenklemmfläche jeweils vollflächig an der ersten Klemmfläche zur Anlage kommen und kraftschlüssig mit dieser zusammenwirken zum drehsicheren Fixieren des ersten Gelenkarms zu dem Verbindungsarm.

Der zweite Lagerabschnitt weist eine konzentrisch zu der zweiten Schwenkachse verlaufende, konvex gekrümmte zweite Klemmfläche auf, wobei die vordere Klemmbacke eine zweite Gegenklemmfläche und die hintere Klemmbacke eine weitere zweite Gegenklemmfläche aufweist, wobei die zweite Gegenklemmfläche und die weitere zweite Gegenklemmfläche jeweils komplementär zu der zweiten Klemmfläche konkav gekrümmt sind, derart, dass bei aufeinander zugestellten Klemmbacken die zweite Gegenklemmfläche und die weitere zweite Gegenklemmfläche jeweils vollflächig an der zweiten Klemmfläche zur Anlage kommen und kraftschlüssig mit dieser zusammenwirken zum drehsicheren Fixieren des zweiten Gelenkarms zu dem Verbindungsarm.

Bei der erfindungsgemäßen gelenkigen Verbindereinrichtung ist es zum Fixieren des erste Gelenkarms und des zweiten Gelenkarms lediglich notwendig, die Klemmbacken aufeinander zuzustellen. Die vordere Klemmbacke und die hintere Klemmbacke wirken sowohl auf den ersten Lagerabschnitt als auch auf den zweiten Lagerabschnitt ein, sodass durch Zustellen der Klemmbacken zueinander beide Lagerabschnitte kraftschlüssig bzw. reibschlüssig zwischen den Klemmbacken drehsicher fixiert sind und somit aufgrund der Lagerung der Klemmeinheit in dem Verbindungsarm zu dem Verbindungsarm drehsicher fixiert sind.

Es ist durchaus denkbar, dass der erste Gelenkarm und/oder der zweite Gelenkarm ebenfalls als weiterer Verbindungsarm mit einer Klemmeinheit ausgebildet sind, um eine Verbindereinrichtung mit mehr als zwei Schwenkachsen zu bilden. Ferner ist es auch denkbar, dass der erste Gelenkarm und/oder der zweite Gelenkarm mit einem weiteren Verbindungsarm schwenkbar verbunden sind, wobei in dem weiteren Verbindungsarm eine weitere Klemmeinheit gelagert ist, um eine Verbindereinrichtung mit mehr als zwei Schwenkachsen, beispielsweise mit vier Schwenkachsen, zu bilden. Vorzugsweise sind die weiteren durch den jeweiligen weiteren Verbindungsarm gebildeten Schwenkachsen parallel zu der ersten Schwenkachse und der zweiten Schwenkachse ausgebildet.

Vorzugsweise beträgt ein Abstand der ersten Schwenkachse von der zweiten Schwenkachse von 20 mm bis 150 mm, insbesondere von 20 mm bis 100 mm.

Es wird als besonders vorteilhaft angesehen, wenn in einem Querschnitt senkrecht zu den Schwenkachsen die erste Klemmfläche, die erste Gegenklemmfläche und die weitere erste Gegenklemmfläche jeweils einen Kreisbogen mit einem identischen ersten Radius beschreiben, und/oder in einem Querschnitt senkrecht zu den Schwenkachsen die zweite Klemmfläche, die zweite Gegenklemmfläche und die weitere zweite Gegenklemmfläche jeweils einen Kreisbogen mit einem identischen zweiten Radius beschreiben. Dadurch ist ein hoher Kraftschluss bei stufenloser Schwenkwinkelverstellung ermöglicht.

Es wird als besonders vorteilhaft angesehen, wenn der erste Radius und der zweite Radius betragsmäßig gleich sind.

Vorzugsweise beträgt der erste Radius von 5 mm bis 20 mm. Vorzugsweise beträgt der zweite Radius von 5 mm bis 20 mm.

In einer besonders bevorzugten Weiterbildung ist vorgesehen, dass die erste Klemmfläche und/oder die zweite Klemmfläche konvex-zylindrisch ausgebildet sind. Dementsprechend wird es ebenfalls als vorteilhaft angesehen, wenn die erste Gegenklemmfläche, die weitere erste Gegenklemmfläche, die zweite Gegenklemmfläche und die weitere zweite Gegenklemmfläche konkav-zylindrisch ausgebildet sind.

Vorzugsweise weisen die erste Klemmfläche und/oder die zweite Klemmfläche einen Mittelpunktswinkel von größer oder gleich 90°, bevorzugt von größer oder gleich 150°, besonders bevorzugt größer oder gleich 180°, auf. Dadurch kann eine großer Winkelverstellbereich erreicht werden.

Um eine besonders kompakte Gestaltung bei dennoch guter Klemmkraft zu erreichen, ist in einer vorteilhaften Weiterbildung vorgesehen, dass eine Summe der Mittelpunktswinkel der von der ersten Gegenklemmfläche und der weiteren ersten Gegenklemmfläche beschriebenen Kreisbögen kleiner ist als 180°, bevorzugt kleiner ist als 120°, besonders bevorzugt kleiner ist als 100°, vorzugsweise kleiner ist als 90°, insbesondere kleiner ist als 60°, und/oder eine Summe der Mittelpunktswinkel der von der zweiten Gegenklemmfläche und der weiteren zweiten Gegenklemmfläche beschriebenen Kreisbögen kleiner ist als 180°, bevorzugt kleiner ist als 120°, besonders bevorzugt kleiner ist als 100°, vorzugsweise kleiner ist als 90°, insbesondere kleiner ist als 60°.

In einer bevorzugten Ausführungsform ist die Summe der Mittelpunktswinkel der von der ersten Gegenklemmfläche und der weiteren ersten Gegenklemmfläche beschriebenen Kreisbögen größer als 10° und/oder eine Summe der Mittelpunktswinkel der von der zweiten Gegenklemmfläche und der weiteren zweiten Gegenklemmfläche beschriebenen Kreisbögen ist größer als 10°.

In der Praxis hat sich gezeigt, dass es nicht notwendig ist, dass die Gegenklemmflächen den jeweiligen Lagerabschnitt um mehr als 180° umgreifen, insofern einander abgewandte Enden der dem jeweiligen Lagerabschnitt zugeordneten Gegenklemmflächen bezogen auf die jeweilige Schwenkachse des Lagerabschnitts einen Winkel von mehr als 180° einschließen. Vielmehr hat sich gezeigt, dass ein von den Enden eingeschlossener Winkel deutlich kleiner sein kann als 180° und dennoch ein ausreichender Kraftschluss erreicht werden kann. Als besonders vorteilhaft wird es angesehen, wenn der von den abgewandten Enden eingeschlossene Winkel kleiner ist als 180°, insbesondere zwischen 20° und 100° beträgt.

In einer besonders bevorzugten Ausführungsform ist vorgesehen, dass der Verbindungsarm einen oberen Abschnitt und einen entlang der axialen Richtung der Schwenkachsen beabstandeten unteren Abschnitt und einen den oberen Abschnitt mit dem unteren Abschnitt verbindenden Verbindungsabschnitt aufweist

Als besonders vorteilhaft wird es aber angesehen, wenn der Verbindungsarm auf einer dem Verbindungsabschnitt in der Zustellrichtung gegenüberliegenden Seite offen ist. Dadurch wird die Montage der gelenkigen Verbindereinrichtung erleichtert.

Im Zusammenhang mit dem Verbindungsabschnitt wird es als besonders vorteilhaft angesehen, wenn die hintere Klemmbacke verliersicher zwischen dem ersten Lagerabschnitt, dem zweiten Lagerabschnitt, dem oberen Abschnitt, dem unteren Abschnitt und dem Verbindungsabschnitt aufgenommen ist.

Eine solche Gestaltung ist dahingehend als vorteilhaft anzusehen, dass die hintere Klemmbacke derart gestaltet sein kann, dass diese als separates Element ausgebildet ist, insofern nicht ortsfest mit dem Verbindungsarm verbunden ist, und dennoch verliersicher in dem Verbindungsarm gelagert ist.

Es wird als besonders vorteilhaft in diesem Zusammenhang angesehen, wenn die hintere Klemmbacke schwimmend zwischen dem ersten Lagerabschnitt, dem zweiten Lagerabschnitt, dem oberen Abschnitt, dem unteren Abschnitt und dem Verbindungsabschnitt aufgenommen ist.

Eine derartige Gestaltung ist dahingehend als vorteilhaft anzusehen, dass bei toleranzbedingten Abweichungen dennoch eine sichere kraftschlüssige Fixierung des jeweiligen Lagerabschnitt mittels der Klemmeinheit ermöglicht ist, da die Klemmbacken aufgrund der schwimmenden Lagerung toleranzbedingte Abweichungen durch eine Lageänderung in dem Verbindungsarm ausgleichen können.

Weiterhin ist eine schwimmende Lagerung dahingehend als vorteilhaft anzusehen, wenn es bei der Verwendung der gelenkigen Verbindereinrichtung zu Abnutzungen an den Klemmflächen und/oder den Gegenklemmflächen kommt.

In einer besonders bevorzugten Ausführungsform ist vorgesehen, dass die vordere Klemmbacke und die hintere Klemmbacke derart gestaltet sind, dass die vordere Klemmbacke und die hintere Klemmbacke in der aufeinander zugestellten Position entlang der Zustellrichtung voneinander beabstandet sind.

Dadurch ist sichergestellt, dass sich die vordere Klemmbacke und die hintere Klemmbacke entlang der Zustellrichtung ausschließlich an den Lageabschnitten und nicht, direkt oder indirekt, aneinander und/oder an dem Verbindungsarm abstützen. Durch eine solche Gestaltung ist gewährleistet, dass es beim Aufeinanderzustellen der Klemmbacken zu dem gewünschten Kraftschluss zwischen den Klemmflächen und den Gegenklemmflächen zwecks Kraftschluss und dadurch bedingter drehfester Fixierung kommt.

Es wird als besonders vorteilhaft angesehen, wenn in der aufeinander zugestellten Position der Klemmbacken ein Spalt zwischen der vorderen Klemmbacke und der hinteren Klemmbacke vorliegt, wobei in einem Querschnitt senkrecht zu den Schwenkachsen ein an den ersten Lagerabschnitt angrenzender erster Endabschnitt des Spalts und ein an den zweiten Lagerabschnitt angrenzender zweiter Endabschnitt des Spalts auf einer Verbindungslinie zwischen der ersten Schwenkachse und der zweiten Schwenkachse liegen. Dadurch kann ein besonders hoher und gleichmäßiger Kraftschluss zu beiden Lagerabschnitten erreicht werden.

Vorzugsweise verläuft die Verbindungslinie senkrecht zu der Zustellrichtung der Klemmbacken.

Vorzugsweise schließen der an den Spalt angrenzende Bereich der ersten Gegenklemmfläche, der an den Spalt angrenzende Bereich der zweiten Gegenklemmfläche, der an den Spalt angrenzende Bereich der weiteren ersten Gegenklemmfläche und der an den Spalt angrenzende Bereich der weiteren zweiten Gegenklemmfläche mit der Zustellrichtung jeweils einen Winkel von 0° bis 5° ein. Dadurch können besonders hohe Presskräfte beim Zustellen der Klemmbacken an den Klemmflächen der Lagerabschnitte bewirkt werden. Zudem kann dadurch eine Selbsthemmung in der aufeinander zugestellte Position der Klemmbacken erreicht werden.

Vorzugsweise sind die erste und die zweite Klemmflächen, die erste und die zweite Gegenklemmfläche und die weitere erste und die weitere zweite Gegenklemmfläche derart gestaltet, dass bei dem aufeinander Zustellen der Klemmbacken die Lagerabschnitte in einander entgegengesetzte Richtungen gepresst werden.

Hinsichtlich der Zustellrichtung der Klemmbacken wird es ferner als vorteilhaft angesehen, wenn die Zustellrichtung senkrecht zu einer durch die Schwenkachsen definierten Ebene verläuft.

Es wird als besonders vorteilhaft angesehen, wenn die Klemmeinheit eine zwischen der vorderen Klemmbacke und der hinteren Klemmbacke wirkende Schraubverbindung aufweist zum aufeinander Zustellen der Klemmbacken durch Anziehen der Schraubverbindung.

In einer besonders bevorzugten Ausführungsform ist vorgesehen, dass die Schraubverbindung zumindest ein Schraubelement mit einem Gewindeabschnitt aufweist, wobei eine Klemmbacke der Klemmbacken zumindest einen Gegengewindeabschnitt aufweist mit dem das zumindest eine Schraubelement mit seinem Gewindeabschnitt verschraubt ist.

Vorzugsweise ist das zumindest eine Schraubelement zwischen der ersten Schwenkachse und der zweiten Schwenkachse angeordnet. Dadurch wird beim Anziehen des Schraubelements oder der Schraubelemente Kraft auf beide Lagerabschnitte ausgeübt.

Es wird als besonders vorteilhaft angesehen, wenn die Schraubverbindung ein einziges Schraubelement aufweist. Dadurch kann die Klemmeinheit besonders schnell zugestellt werden und geöffnet werden durch Anziehen und Lösen des einen einzigen Schraubelements.

Die Schraubverbindung kann aber auch mehrere Schraubelemente, beispielsweise zwei Schraubelemente, umfassen.

Insbesondere wenn die Schwenkachsen einen größeren Abstand aufweisen, beispielsweise größer als 50 mm, wird es als vorteilhaft angesehen, wenn die Schraubverbindung mehrere Schraubelemente umfasst, um eine hohe Klemmkraft und somit einen hohen Kraftschluss an beiden Lagerabschnitten zu erhalten, wobei zumindest eines der mehreren Schraubelemente benachbart zu dem ersten Lagerabschnitt ausgebildet ist und ein anderes der mehreren Schraubelemente benachbart zu dem zweiten Lagerabschnitt ausgebildet ist.

In einer vorteilhaften Weiterbildung ist vorgesehen, dass das zumindest eine Schraubelement als Schraube mit einem Außengewinde als Gewindeabschnitt ausgebildet ist und der zumindest eine Gegengewindeabschnitt der einen Klemmbacken als Innengewinde ausgebildet ist, wobei die zumindest eine Schraube die andere Klemmbacke durchsetzt.

Alternativ ist es grundsätzlich denkbar, dass die eine der Klemmbacken zumindest einen die andere Klemmbacke durchsetzenden Gewindestab mit einem Außengewinde aufweist, wobei das zumindest eine Schraubelement ein Innengewinde aufweist, beispielsweise als Mutter ausgebildet ist.

Vorzugsweise handelt es sich bei der einen Klemmbacke um die vordere Klemmbacke. Bei der anderen Klemmbacke handelt es sich dementsprechend vorzugsweise um die hintere Klemmbacke.

Vorzugsweise weist die hintere Klemmbacke zumindest eine Durchgangsöffnung auf, beispielsweise in Form einer Bohrung, wobei das zumindest eine Schraubelement die hintere Klemmbacke durchsetzt.

Es wird als besonders vorteilhaft angesehen, wenn in einem Querschnitt senkrecht zu den Schwenkachsen die eine Klemmbacke im Bereich des zumindest einen Innengewindes eine größere Materialstärke aufweist als in den daran angrenzenden Bereichen. Dadurch kann bei besonders kompakte Gestaltung der Verbindereinrichtung hinsichtlich der Ausdehnung der Klemmeinheit in Richtung der Zustellrichtung der Klemmeinheit bzw. der Klemmbacken erreicht werden und dennoch ein genügend großer Gewindeabschnitt bereitgestellt werden. Zudem kann dadurch erreicht werden, dass die Endabschnitte des Spalts auf der Verbindungslinie zwischen den Schwenkachsen der Lagerabschnitte liegen, um die Klemmflächen mit sämtlichen Gegenklemmflächen vollflächig in Kontakt zu bringen.

In diesem Zusammenhang wird es als besonders vorteilhaft angesehen, wenn in einem Querschnitt senkrecht zu den Schwenkachsen die eine Klemmbacke im Bereich des zumindest einen Innengewindes auf ihrer der anderen Klemmbacke zugewandten Seite einen Vorsprung und die andere Klemmbacke einen zu dem Vorsprung korrespondierenden Rücksprung aufweist.

In einer besonders bevorzugten Ausführungsform ist vorgesehen, dass die Schraubverbindung derart gestaltet ist, dass beim Anziehen der Schraubverbindung ausschließlich die vordere Klemmbacke und die hintere Klemmbacke relativ zueinander zugestellt werden, insbesondere derart, dass entlang der Zustellrichtung kein Abstützen der Klemmeinheit oder Komponenten der Klemmeinheit an dem Verbindungsarm und/oder der Klemmbacken aneinander auftritt.

Insbesondere vor diesem Hintergrund wird es als vorteilhaft angesehen, wenn die Klemmeinheit samt Schraubverbindung schwimmend in dem Verbindungsarm gelagert ist.

In einer vorteilhaft Weiterbildung ist vorgesehen, dass die Klemmeinheit über die Schraubverbindung vormontierbar ist, um eine vormontierte Montageeinheit zu schaffen, wobei diese vormontierte Montageeinheit die vordere Klemmbacke, die hintere Klemmbacke und die Schraubverbindung, beispielsweise in Form einer Schraube, umfasst. Eine derartige vormontierte Montageeinheit erleichtert die Endmontage der gelenkigen Verbindereinrichtung. Beispielsweise kann in einem ersten Schritt der erste Gelenkarm über seinen ersten Lagerabschnitt mit dem Verbindungsarm verbunden werden. Dies kann beispielsweise dadurch erfolgen, dass der erste Lagerabschnitt eine Durchgangsbohrung aufweist, wobei diese Durchgangsbohrung der Aufnahme eines Zylinderstifts dient, wobei diese Zylinderstift mittels einer Untermaß-Passung in die Durchgangsbohrung eingepresst wird. Der Zylinderstift ist ferner um die erste Schwenkachse drehbar in dem Verbindungsarm aufgenommen, beispielsweise in Durchgangsbohrungen des Verbindungsarms gelagert. Anschließend wird die vormontierte Klemmeinheit in dem Verbindungsarm eingelegt, wobei die Klemmbacken nicht aufeinander zugestellten sind bzw. ein ausreichender Freiraum zwischen den Klemmbacken besteht, um die erste Gegenklemmfläche und die weitere erste Gegenklemmfläche an den bereits montierten ersten Lagerabschnitt anzuordnen und den zweiten Lagerabschnitt zwischen die zweiten Gegenklemmfläche und die weitere zweite Gegenklemmfläche einzuführen, sodass dieser zweite Lagerabschnitt korrekt zu dem Verbindungsarm positioniert ist, um den zweiten Lagerabschnitt über einen den Verbindungsarm durchsetzenden Zylinderstift in dem Verbindungsarm schwenkbeweglich um die zweite Schwenkachse zu sichern.

Der erfindungsgemäße Pelottenhalter umfasst die erfindungsgemäße gelenkige Verbindereinrichtung. Dabei ist vorgesehen, dass der erste Schwenkarm eine Pelotte aufweist oder mit einer Pelotte verbunden ist, wobei der zweite Schwenkarm eine Befestigungseinrichtung zur Befestigung des Pelottenhalters an einem Gestell aufweist, beispielsweise zur Befestigung des Pelottenhalters an einem Gestell eines Rollstuhls.

Da der Pelottenhalter die erfindungsgemäße gelenkige Verbindereinrichtung umfasst, gelten die Ausführungen zu den Vorteilen und vorteilhaften Weiterbildungen der gelenkigen Verbindereinrichtung entsprechend für den Pelottenhalter und umgekehrt.

In den nachfolgenden Figuren wird die Erfindung anhand von Ausführungsbeispielen näher erläutert, ohne auf diese beschränkt zu sein. Es zeigen:
- Figur 1: einen Pelottenhalter mit einer gelenkigen Verbindereinrichtung gemäß einer ersten Ausführungsform in einer perspektivischen Darstellung,
- Figur 2: die gelenkige Verbindereinrichtung des Pelottenhalters gemäß Figur 1 in einer perspektivischen Darstellung,
- Figur 3: die gelenkige Verbindereinrichtung gemäß Figur 2 in einer Ansicht gemäß dem Pfeil III in Figur 4,
- Figur 4: die gelenkige Verbindereinrichtung in einer Schnittansicht gemäß der Linie A-A in Figur 3,
- Figur 4A: ein Teilbereich der Fig. 4 in einer vergrößerten Darstellung,
- Figur 5: die gelenkige Verbindereinrichtung gemäß Figur 3 in einer Explosionsdarstellung,
- Figur 6: eine Klemmeinheit der Verbindereinrichtung gemäß Figur 2 in einem vormontierten Zustand
- Figur 7: eine gelenkige Verbindereinrichtung gemäß einer zweiten Ausführungsform in einer perspektivischen Darstellung,
- Figur 8: einen zweiten Gelenkarm der Verbindereinrichtung gemäß Figur 7,
- Figur 9: eine gelenkige Verbindereinrichtung gemäß einer dritten Ausführungsform in einer Ansicht gemäß dem Pfeil IX in Figur 10,
- Figur 10: die gelenkige Verbindereinrichtung in einer Schnittansicht gemäß der Linie
- A-A: in Figur 9.

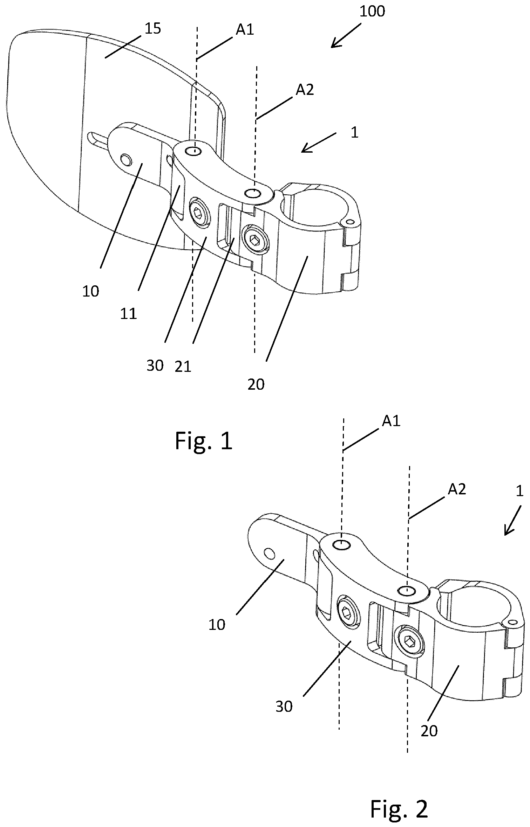

Die Figuren 1 bis 6 zeigen eine erste Ausführungsform einer gelenkigen Verbindereinrichtung 1 und Bestandteile der gelenkigen Verbindereinrichtung 1. Die Figur 1 zeigt einen Pelottenhalter 100. Der Pelottenhalter 100 umfasst die erste Ausführungsform der gelenkigen Verbindereinrichtung 1, die vorliegend als doppelgelenkige Verbindereinrichtung ausgebildet ist. Die gelenkige Verbindereinrichtung 1 umfasst einen ersten Schwenkarm 10 einen zweiten Schwenkarm 20 und einen Verbindungsarm 30. An dem ersten Gelenkarm 10 ist eine Pelotte 15 angebracht. Mit dieser Pelotte 15 kann durchaus noch ein Stoffelement verbunden sein.

Der erste Gelenkarm 10 weist einen ersten Lagerabschnitt 11 auf, wobei der erste Gelenkarm 10 mit seinem ersten Lagerabschnitt 11 um eine erste Schwenkachse A1 schwenkbar in dem Verbindungsarm 30 gelagert ist.

Der zweite Gelenkarm 20 weist einen zweiten Lagerabschnitt 21 auf, wobei der zweite Gelenkarm 20 mit seinem zweiten Lagerabschnitt 21 um eine zweite Schwenkachse A2 schwenkbar in dem Verbindungsarm 30 gelagert ist.

Die erste Schwenkachse A1 und die zweite Schwenkachse A2 sind voneinander beanstandet und verlaufen parallel zueinander.

Der jeweilige Lagerabschnitt 11, 12 ist über einen Zylinderstift 80 in dem Verbindungsarm 30 um die jeweilige Schwenkachse A1, A2 schwenkbar gelagert. Zu diesem Zweck durchsetzt der jeweilige Zylinderstift 80 eine korrespondierende Durchgangsbohrung 81 des jeweiligen Lagerabschnitts 11, 21 und ist mittels Untermaß-Passung in diese Durchgangsbohrung 81 eingepresst. Der Zylinderstift 80 ist in korrespondierenden Durchgangsbohrungen 83 des Verbindungsarms 30 drehbar aufgenommen, um das Verschwenken um die jeweilige Schwenkachse A1, A2 zu ermöglichen.

Der zweite Gelenkarm 20 ist als Rahmenklemme ausgebildet und weist eine Gelenk-Klemmhälfte 26 und eine Spann-Klemmhälfte 27 und eine Verspannschraube 28 auf. Die Rahmenklemme ist derart gestaltet, dass eine Stange zwischen die Gelenk-Klemmhälfte 26 und die Spann-Klemmhälfte 27 eingebracht und durch Anziehen der Verspannschraube 28 in der Rahmenklemme klemmend gehalten werden kann. Über den als Rahmenklemme ausgebildeten zweiten Gelenkarm 20, kann die gelenkige Verbindereinrichtung 1 beispielsweise an einer Stange eines Untergestells eines Rollstuhls befestigt werden.

Durch Verschwenken der Gelenkarme 10, 20 zu dem Verbindungsarm 30 kann eine Ausrichtung der Pelotte 15 zu dem zweiten Gelenkarm 20 erfolgen. Wenn der zweite Gelenkarm 20 an einem Rollstuhl befestigt ist, kann auf diese Weise die Pelotte 15 zu dem Rollstuhl ausgerichtet werden zwecks Einrichtung der Pelotte 15.

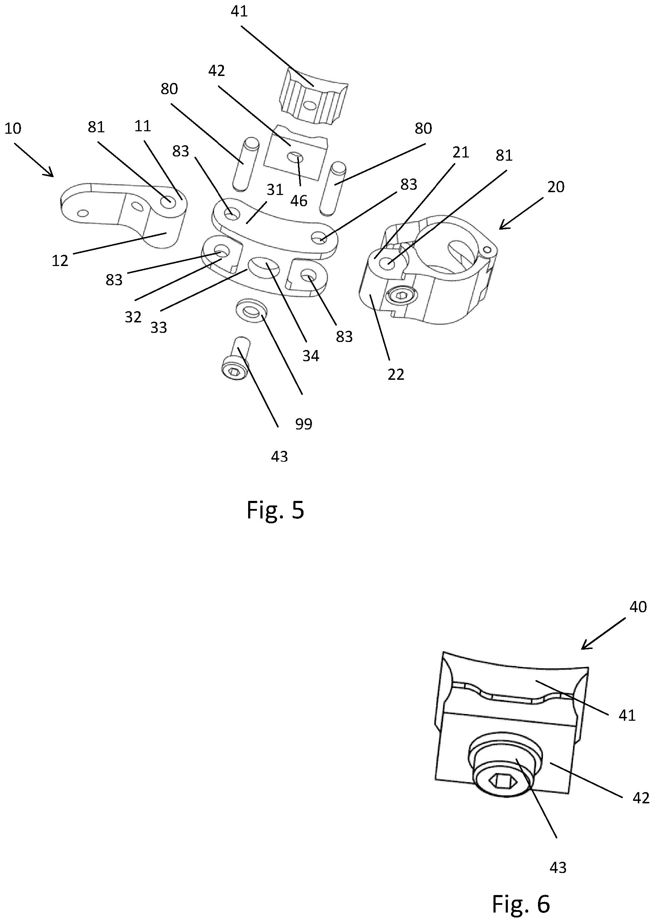

Um den ersten Gelenkarm 10 und den zweiten Gelenkarm 20 zu dem Verbindungsarm 30 in der gewünschten Schwenkstellung zu fixieren zwecks Fixierung der Pelotte 15 in der gewünschten Position, weist die gelenkige Verbindereinrichtung 1 eine Klemmeinheit 40 auf. Die Klemmeinheit 40 als solche ist in der Figur 6 in einem vormontierten Zustand gezeigt.

Die Klemmeinheit 40 weist eine vordere Klemmbacke 41 und eine hintere Klemmbacke 42 auf. Die Klemmbacken 41, 42 sind entlang einer Zustellrichtung Z1 aufeinander zustellbar zum gleichzeitigen Fixieren des ersten Gelenkarms 10 und des zweiten Gelenkarms 20 in ihrer jeweiligen Schwenkstellung zu dem Verbindungsarm 30 in einem einzigen Schritt. Die Zustellrichtung Z1 verläuft vorliegend senkrecht zu einer durch die Schwenkachsen A1, A2 definierten Ebene. Das Zustellen und Lösen der vorderen Klemmbacke 41 zu der hinteren Klemmbacke 42 erfolgt über ein Schraubelement 43. Das Schraubelement 43 ist als Schraube ausgebildet und weist einen Gewindeabschnitt 44 auf, wobei das Schraubelement 43 eine Durchgangsöffnung 46 der hinteren Klemmbacke 43 durchsetzt und in einen in der vorderen Klemmbacke 41 ausgebildeten Gegengewindeabschnitt 45 eingeschraubt ist. Zwischen einem Kopf des Schraubelements 43 und der hinteren Klemmbacke 42 ist eine Unterlegscheibe 99 angeordnet.

Die Klemmeinheit 40 ist schwimmend und verliersicher in dem Verbindungsarm 30 gelagert. Die schwimmende und verliersicher Lagerung der Klemmeinheit 40 in dem Verbindungsarm 30 ist dadurch bewirkt, dass der Verbindungsarm 30 einen oberen Abschnitt 31, einen entlang der axialen Richtung der Achsen A1, A2 von dem oberen Abschnitt 31 beabstandeten und parallel zu dem oberen Abschnitt 31 verlaufenden unteren Abschnitt 32 und einen den oberen Abschnitt 31 mit dem unteren Abschnitt 32 verbindenden Verbindungsabschnitt 33 aufweist. Dieser Verbindungsabschnitt 33 weist eine Durchgangsöffnung 34 auf, wobei in dieser Durchgangsöffnung der Kopf des Schraubelements 43 und die Unterlegscheibe 99 aufgenommen sind. Die hintere Klemmbacke 42 ist zwischen dem ersten Lagerabschnitt 11, dem zweiten Lagerabschnitt 21, dem oberen Abschnitt 31, dem unteren Abschnitt 32 und dem Verbindungsabschnitt 33 verliersicher aufgenommen mit einem Spiel in sämtlichen Raumrichtungen, wodurch die schwimmende und der verliersichere Lagerung der Klemmeinheit 40 in dem Verbindungsarm 30 bewirkt ist.

Wie bereits ausgeführt, können über ein Zustellen der vorderen Klemmbacke 41 und der hinteren Klemmbacke 42 zueinander, bewirkt durch Anziehen des Schraubelements 43, und somit einer einzigen Fixierhandlung die Gelenkarme 10, 20 in ihrer jeweiligen Schwenkstellung zu dem Verbindungsarm 30 drehsicher fixiert werden. Zu diesem Zweck weist der erste Lagerabschnitt 11 eine konzentrisch zu der ersten Schwenkachse A1 verlaufende, konvex gekrümmte erste Klemmfläche 12 auf. Die erste Klemmfläche 12 folgt dabei der Mantelfläche eines Kreiszylinders. Die vordere Klemmbacke 41 weist eine zu der ersten Klemmfläche 12 korrespondierende erste Gegenklemmfläche 411 und die hintere Klemmbacke 42 weist eine zu der ersten Klemmfläche 12 korrespondierende weitere erste Gegenklemmfläche 421 auf. Die erste Gegenklemmfläche 411 und die weitere erste Gegenklemmfläche 421 sind komplementär zu der ersten Klemmfläche 12 konkav gekrümmt, derart, dass bei aufeinander zugestellten Klemmbacken 41, 42 die erste Gegenklemmfläche 411 und die weitere erste Gegenklemmfläche 421 jeweils vollflächig an der ersten Klemmfläche 12 zur Anlage kommen und kraftschlüssig mit dieser zusammenwirken. Dadurch wird eine drehsichere Fixierung des ersten Gelenkarms 10 zu dem Verbindungsarm 30 erreicht.

Analog dazu weist der zweite Lagerabschnitt 21 eine konzentrisch zu der zweiten Schwenkachse A2 verlaufende konvex gekrümmte zweite Klemmfläche 22 auf, die wiederum der Mantelfläche eines Kreiszylinders folgt. Die vordere Klemmbacke 41 weist eine zweite Gegenklemmfläche 412 und die hintere Klemmbacke 42 weist eine weitere zweite Gegenklemmfläche 422 auf. Die zweite Gegenklemmfläche 412 und die weitere zweite Gegenklemmfläche 422 sind jeweils komplementär zu der zweiten Klemmfläche 22 konkav gekrümmt. Bei aufeinander zugestellten Klemmbacken 41, 42 liegen die zweite Gegenklemmfläche 412 und die weitere zweite Gegenklemmfläche 422 jeweils vollflächig an der zweiten Klemmfläche 22 an und wirken kraftschlüssig mit dieser zusammen zum drehsicheren Fixieren des zweite Gelenkarms 20 zu dem Verbindungsarm 30.

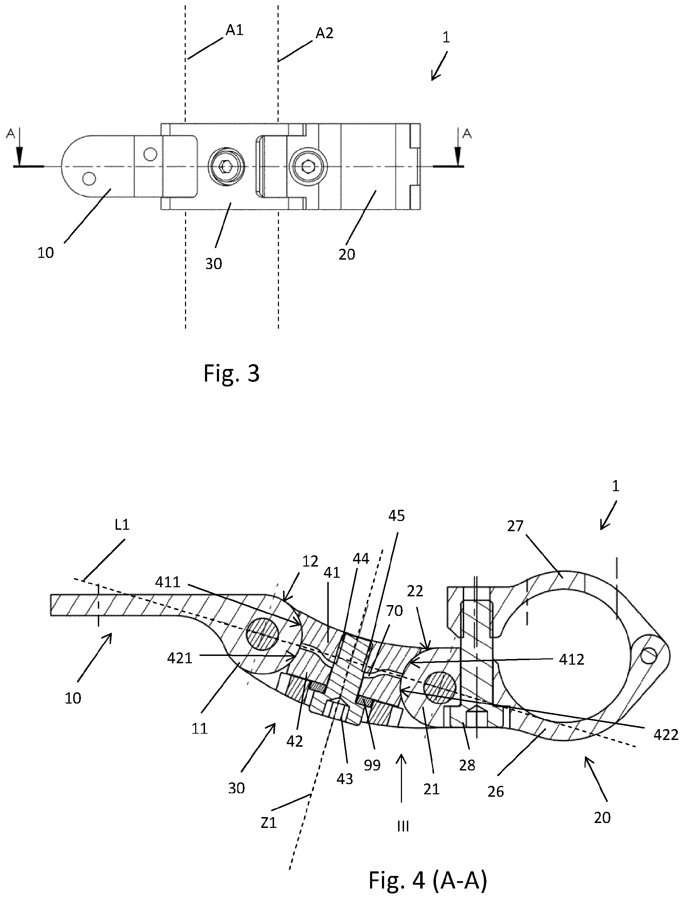

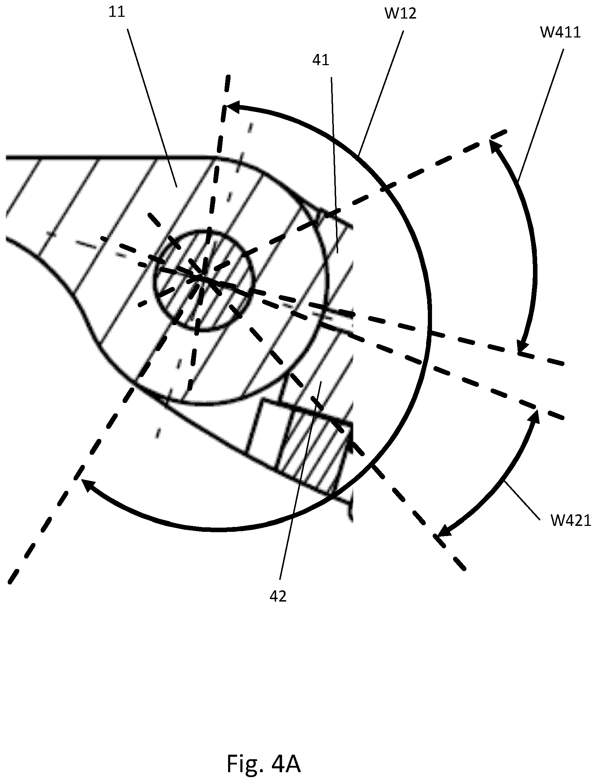

In dem Querschnitt, der in der Figur 4 und in der Figur 4A gezeigt ist, wird deutlich, dass die erste Klemmfläche 12, die erste Gegenklemmfläche 411 und die weitere erste Gegenklemmfläche 421 jeweils einen Kreisbogen mit einem identischen ersten Radius beschreiben. In der Klemmstellung bzw. in der aufeinander zugestellten Stellung der ersten Klemmbacke 41 und der zweiten Klemmbacke 42 stimmen die Kreismittelpunkte der Kreisbögen überein und liegen in der ersten Schwenkachse A1. Während der Kreisbogen der ersten Klemmfläche 12 einen Mittelpunktswinkel W12 von größer 180° beschreibt, ist eine Summe eines Mittelpunktswinkel W411 der ersten Gegenklemmfläche 411 und eines Mittelpunktswinkel W421 der weiteren ersten Gegenklemmfläche 421 kleiner als 100°. Dies ist insbesondere der Figur 4A zu entnehmen. Entsprechendes gilt für die zweite Klemmfläche 22, die zweite Gegenklemmfläche 412 und die weitere zweite Gegenklemmfläche 422.

Wie insbesondere der Figur 4 zu entnehmen ist, sind die vordere Klemmbacke 41 und die hintere Klemmbacke 42 derart gestaltet, dass die vordere Klemmbacke 41 und die hintere Klemmbacke 42 in der aufeinander zugestellten Position, die in der Figur 4 gezeigt ist, in der Zustellrichtung Z1 voneinander beanstandet sind. Dementsprechend ergibt sich in der aufeinander zugestellten Position der Klemmbacken 41, 42 ein Spalt 70 zwischen der vorderen Klemmbacke 41 und der hinteren Klemmbacke 42 in der Zustellrichtung Z1. In einem Querschnitt senkrecht zu den Schwenkachsen A1, A2, dargestellt in der Fig. 4, weist der Spalt 70 einen an den ersten Lagerabschnitt 11 angrenzenden ersten Endabschnitt und einen an den zweiten Lagerabschnitt 21 angrenzenden zweiten Endabschnitt auf. Diese beiden Endabschnitte des Spalts 70 liegen auf einer geradlinigen Verbindungslinie L1 zwischen der ersten Schwenkachse A1 und der zweiten Schwenkachse A2.

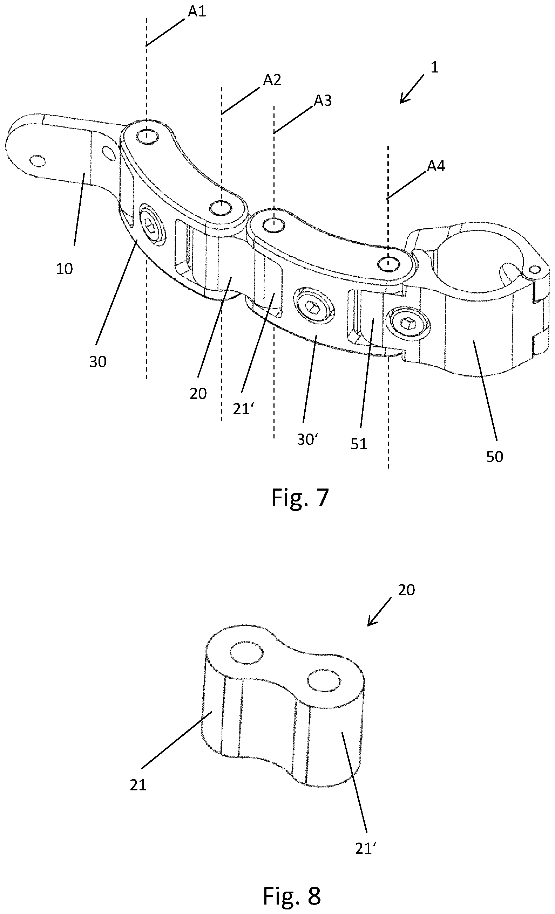

Die Figur 7 zeigt eine gelenkige Verbindereinrichtung 1 gemäß einer zweiten Ausführungsform in einer perspektivischen Darstellung. Diese unterscheidet sich von der ersten Ausführungsform im Wesentlichen dadurch, dass die Verbindereinrichtung einen weiteren Verbindungsarm 30' aufweist. Der zweite Gelenkarm 20 ist als Zwischenarm ausgebildet und weist einen weiteren zweiten Lagerabschnitt 21' auf mit dem der zweite Gelenkarm 20 um eine dritte Schwenkachse A3 schwenkbar in dem weiteren Verbindungsarm 30' gelagert ist. Mit dem weiteren Verbindungsarm 30' ist ferner ein dritter Gelenkarm 50 schwenkbar verbunden. Der dritte Gelenkarm 50 weist zu diesem Zweck einen dritten Lagerabschnitt 51 auf, mit dem der dritte Gelenkarm 50 um eine vierte Schwenkachse A4 schwenkbar in dem weiteren Verbindungsarm 30' gelagert ist. Der dritte Gelenkarm 50 ist als Rahmenklemme ausgebildet. In dem weiteren Verbindungsarm 30' ist eine weitere Klemmeinheit gelagert zum Fixieren des zweiten Gelenkarms 20 und des dritten Gelenkarms 50 in ihrer jeweiligen Schwenkstellung zu dem weiteren Verbindungsarm 30`. Die Funktionsweise der in dem weiteren Verbindungsarm 30' gelagerten weiteren Klemmeinheit und deren Zusammenwirken mit dem weiteren Verbindungsarm 30`, dem weiteren zweiten Lagerabschnitt 21' und dem dritten Lagerabschnitt 51 entspricht derjenigen der in dem Verbindungarm 30 gelagerten Klemmeinheit 40 und deren Zusammenwirken mit dem Verbindungsarm 30, dem zweiten Lagerabschnitt 21 und dem ersten Lagerabschnitt 11. Der zweite Gelenkarm 20 der zweiten Ausführungsform ist in der Figur 8 isoliert dargestellt.

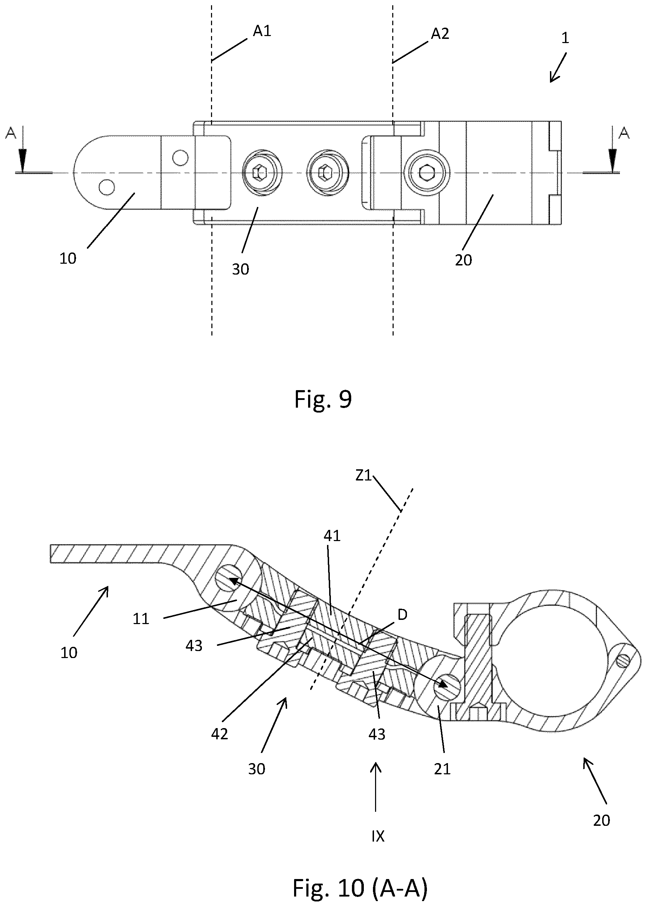

Die Figuren 9 und 10 zeigen eine gelenkige Verbindereinrichtung 1 gemäß einer dritten Ausführungsform. Diese unterscheidet sich von der ersten Ausführungsform im Wesentlichen durch die Gestaltung des Verbindungsarms 30 und der Klemmeinheit 40. Der Verbindungsarm 30 der dritten Ausführungsform ist länger ausgebildet als der Verbindungsarm 30 der ersten Ausführungsform, sodass ein Abstand D der ersten Schwenkachse A1 von der zweiten Schwenkachse A2 bei der dritten Ausführungsform größer ist als bei der ersten Ausführungsform. Dementsprechend ist auch die Klemmeinheit 40 der dritten Ausführungsform länger ausgebildet als die Klemmeinheit 40 der ersten Ausführungsform. Um sicherzustellen, dass bei derjeweiligen Lagerachse 11, 21 eine ausreichende Anpresskraft und somit ein ausreichender Kraftschluss zur drehfesten Fixierung der Gelenkarme 10, 20 durch die Klemmbacken 41, 42 aufgebracht werden können, weist die Schraubverbindung gemäß der dritten Ausführungsform nicht ein einziges zentrales Schraubelement 43 auf, sondern zwei Schraubelemente 43. Das eine Schraubelement 43 ist benachbart zu dem ersten Lagerabschnitt 11 ausgebildet ist und das andere Schraubelement 43 ist benachbart zu dem zweiten Lagerabschnitt 21 ausgebildet.

### Bezugszeichenliste

- 1: gelenkige Verbindereinrichtung
- 10: erster Gelenkarm
- 11: erster Lagerabschnitt
- 12: erste Klemmfläche
- 15: Pelotte
- 20: zweiter Gelenkarm
- 21: zweiter Lagerabschnitt
- 21': weiterer zweiter Lagerabschnitt
- 22: zweite Klemmfläche
- 26: Gelenk-Klemmhälfte
- 27: Spann-Klemmhälfte
- 28: Verspannschraube
- 30: Verbindungsarm
- 30': weiterer Verbindungsarm
- 31: oberer Abschnitt
- 32: unterer abschnitt
- 33: Verbindungsabschnitt
- 34: Durchgangsöffnung
- 40: Klemmeinheit
- 41: vordere Klemmbacke
- 42: hintere Klemmbacke
- 43: Schraubelement
- 44: Gewindeabschnitt
- 45: Gegengewindeabschnitt
- 46: Durchgangsöffnung
- 50: dritter Gelenkarm
- 51: dritter Lagerabschnitt
- 70: Spalt
- 80: Zylinderstift
- 81: Durchgangsbohrung
- 83: Durchgangsbohrung
- 99: Unterlegscheibe
- 100: Pelottenhalter
- 411: erste Gegenklemmfläche
- 412: zweite Gegenklemmfläche
- 421: weitere erste Gegenklemmfläche
- 422: weitere zweite Gegenklemmfläche

- A1: erste Schwenkachse
- A2: zweite Schwenkachse
- A3: dritte Schwenkachse
- A4: vierte Schwenkachse
- D: Abstand
- L1: Verbindungslinie
- Z1: Zustellrichtung

- W12: Mittelpunktswinkel
- W411: Mittelpunktswinkel
- W421: Mittelpunktswinkel

## Patentansprüche

1. Gelenkige Verbindereinrichtung (1), wobei die Verbindereinrichtung (1) einen ersten Gelenkarm (10), einen zweiten Gelenkarm (20) und ein Verbindungsarm (30) aufweist, wobei der erste Gelenkarm (10) einen ersten Lagerabschnitt (11) aufweist, wobei der erste Gelenkarm (10) mit seinem ersten Lagerabschnitt (11) um eine erste Schwenkachse (A1) schwenkbar in dem Verbindungsarm (30) gelagert ist und wobei der zweite Gelenkarm (20) einen zweiten Lagerabschnitt (21) aufweist, wobei der zweite Gelenkarm (20) mit seinem zweiten Lagerabschnitt (21) um eine zweite Schwenkachse (A2) schwenkbar in dem Verbindungsarm (30) gelagert ist, wobei die erste Schwenkachse (A2) und die zweite Schwenkachse (A2) zueinander parallel verlaufen, wobei die Verbindereinrichtung (1) eine Klemmeinheit (40) aufweist, wobei die Klemmeinheit (40) in dem Verbindungsarm (30) gelagert ist, wobei die Klemmeinheit (40) eine vordere Klemmbacke (41) und eine hintere Klemmbacke (42) aufweist, wobei die Klemmbacken (41, 42) entlang einer Zustellrichtung (Z1) aufeinander zustellbar sind zum Fixieren des ersten Gelenkarms (10) und des zweiten Gelenkarms (20) in ihrer jeweiligen Schwenkstellung zu dem Verbindungsarm (30),
wobei der erste Lagerabschnitt (11) eine konzentrisch zu der ersten Schwenkachse (A1) verlaufende, konvex gekrümmte erste Klemmfläche (12) aufweist, wobei die vordere Klemmbacke (41) eine erste Gegenklemmfläche (411) und die hintere Klemmbacke (42) eine weitere erste Gegenklemmfläche (421) aufweist, wobei die erste Gegenklemmfläche (411) und die weitere erste Gegenklemmfläche (421) jeweils komplementär zu der ersten Klemmfläche (12) konkav gekrümmt sind, derart, dass bei aufeinander zugestellten Klemmbacken (41, 42) die erste Gegenklemmfläche (411) und die weitere erste Gegenklemmfläche (421) jeweils vollflächig an der ersten Klemmfläche (12) zur Anlage kommen und kraftschlüssig mit dieser zusammenwirken zum drehsicheren Fixieren des ersten Gelenkarms (10) zu dem Verbindungsarm (30),
wobei der zweite Lagerabschnitt (21) eine konzentrisch zu der zweiten Schwenkachse (A2) verlaufende, konvex gekrümmte zweite Klemmfläche (22) aufweist, wobei die vordere Klemmbacke (41) eine zweite Gegenklemmfläche (412) und die hintere Klemmbacke (42) eine weitere zweite Gegenklemmfläche (422) aufweist, wobei die zweite Gegenklemmfläche (412) und die weitere zweite Gegenklemmfläche (422) jeweils komplementär zu der zweiten Klemmfläche (22) konkav gekrümmt sind, derart, dass bei aufeinander zugestellten Klemmbacken (41, 42) die zweite Gegenklemmfläche (412) und die weitere zweite Gegenklemmfläche (422) jeweils vollflächig an der zweiten Klemmfläche (22) zur Anlage kommen und kraftschlüssig mit dieser zusammenwirken zum drehsicheren Fixieren des zweiten Gelenkarms (20) zu dem Verbindungsarm (30).

2. Gelenkige Verbindereinrichtung (1) nach Anspruch 1, wobei in einem Querschnitt senkrecht zu den Schwenkachsen (A1, A2) die erste Klemmfläche (12), die erste Gegenklemmfläche (411) und die weitere erste Gegenklemmfläche (421) jeweils einen Kreisbogen mit einem identischen ersten Radius beschreiben, und/oder wobei in einem Querschnitt senkrecht zu den Schwenkachsen (A1, A2) die zweite Klemmfläche (22), die zweite Gegenklemmfläche (412) und die weitere zweite Gegenklemmfläche (422) jeweils einen Kreisbogen mit einem identischen zweiten Radius beschreiben.

3. Gelenkige Verbindereinrichtung (1) nach Anspruch 1, wobei eine Summe der Mittelpunktswinkel (W411, W421) der von der ersten Gegenklemmfläche und der weiteren ersten Gegenklemmfläche beschriebenen Kreisbögen kleiner ist als 180°, bevorzugt kleiner ist als 120°, besonders bevorzugt kleiner ist als 100°, und/oder wobei eine Summe der Mittelpunktswinkel der von der zweiten Gegenklemmfläche und der weiteren zweiten Gegenklemmfläche beschriebenen Kreisbögen kleiner ist als 180°, bevorzugt kleiner ist als 120°, besonders bevorzugt kleiner ist als 100°.

4. Gelenkige Verbindereinrichtung (1) nach einem der Ansprüche 1 bis 3, wobei der Verbindungsarm (30) einen oberen Abschnitt (31) und einen entlang der axialen Richtung der Schwenkachsen (A1, A2) beabstandeten unteren Abschnitt (32) und einen den oberen Abschnitt (31) mit dem unteren Abschnitt (32) verbindenden Verbindungsabschnitt (33) aufweist.

5. Gelenkige Verbindereinrichtung (1) nach Anspruch 4, wobei die hintere Klemmbacke (42) verliersicher zwischen dem ersten Lagerabschnitt (11), dem zweiten Lagerabschnitt (21), dem oberen Abschnitt (31), dem unteren Abschnitt (32) und dem Verbindungsabschnitt (33) aufgenommen ist.

6. Gelenkige Verbindereinrichtung (1) nach Anspruch 5 oder 6, wobei die hintere Klemmbacke (42) schwimmend zwischen dem ersten Lagerabschnitt (11), dem zweiten Lagerabschnitt (21), dem oberen Abschnitt (31), dem unteren Abschnitt (32) und dem Verbindungsabschnitt (33) aufgenommen ist.

7. Gelenkige Verbindereinrichtung (1) nach einem der Ansprüche 1 bis 6, wobei die vordere Klemmbacke (41) und die hintere Klemmbacke (42) derart gestaltet sind, dass die vordere Klemmbacke (41) und die hintere Klemmbacke (42) in der aufeinander zugestellten Position in der Zustellrichtung (Z1) voneinander beabstandet sind.

8. Gelenkige Verbindereinrichtung (1) nach Anspruch 7, wobei in der aufeinander zugestellten Position der Klemmbacken (41, 42) ein Spalt (70) zwischen der vorderen Klemmbacke (41) und der hinteren Klemmbacke (42) vorliegt, wobei in einem Querschnitt senkrecht zu den Schwenkachsen (A1, A2) ein an den ersten Lagerabschnitt (11) angrenzender erster Endabschnitt des Spalts (70) und ein an den zweiten Lagerabschnitt (21) angrenzender zweiter Endabschnitt des Spalts (70) auf einer Verbindungslinie (L1) zwischen der ersten Schwenkachse (A1) und der zweiten Schwenkachse (A2) liegen.

9. Gelenkige Verbindereinrichtung (1) nach einem der Ansprüche 1 bis 8, wobei die Klemmeinheit (40) eine zwischen der vorderen Klemmbacke (41) und der hinteren Klemmbacke (42) wirkende Schraubverbindung aufweist zum aufeinander Zustellen der Klemmbacken (41, 42) durch Anziehen der Schraubverbindung.

10. Gelenkige Verbindereinrichtung (1) nach Anspruch 9, wobei die Schraubverbindung zumindest ein Schraubelement (43) mit einem Gewindeabschnitt (44) aufweist, wobei eine Klemmbacke (41, 42) der Klemmbacken (41, 42) zumindest einen Gegengewindeabschnitt (45) aufweist mit dem das zumindest eine Schraubelement (43) mit seinem Gewindeabschnitt (44) verschraubt ist.

11. Gelenkige Verbindereinrichtung (1) nach Anspruch 10, wobei das zumindest eine Schraubelement (43) als Schraube mit einem Außengewinde als Gewindeabschnitt (44) ausgebildet ist und der zumindest eine Gegengewindeabschnitt (45) der einen Klemmbacken (41, 42) als Innengewinde ausgebildet ist, wobei die zumindest eine Schraube die andere Klemmbacke (41, 42) durchsetzt.

12. Gelenkige Verbindereinrichtung (1) nach Anspruch 10, wobei in einem Querschnitt senkrecht zu den Schwenkachsen (A1, A2) die eine Klemmbacke (41, 42) im Bereich des zumindest einen Innengewindes eine größere Materialstärke aufweist als in den daran angrenzenden Bereichen.

13. Gelenkige Verbindereinrichtung (1) nach Anspruch 12, wobei in einem Querschnitt senkrecht zu den Schwenkachsen (A1, A2) die eine Klemmbacke (41, 42) im Bereich des zumindest einen Innengewindes auf ihrer der anderen Klemmbacke (41, 42) zugewandten Seite einen Vorsprung und die andere Klemmbacke (41, 42) einen zu dem Vorsprung korrespondierenden Rücksprung aufweist.

14. Gelenkige Verbindereinrichtung (1) nach einem der Ansprüche 8 bis 13, wobei die Schraubverbindung derart gestaltet ist, dass beim Anziehen der Schraubverbindung ausschließlich die vordere Klemmbacke (41) und die hintere Klemmbacke (42) relativ zueinander zugestellt werden, insbesondere in der Zustellrichtung (Z1) kein Abstützen der Klemmbacken (41, 42) aneinander und/oder an dem Verbindungsarm (30) auftritt.

15. Pelottenhalter (100) umfassen eine gelenkige Verbindereinrichtung (1) nach einem der Ansprüche 1 bis 14, wobei der erste Schwenkarm (10) eine Pelotte (15) aufweist oder mit einer Pelotte (15) verbunden ist, wobei der zweite Schwenkarm (20) eine Befestigungseinrichtung (25) zur Befestigung des Pelottenhalters (100) an einem Gestell aufweist.
